# EUROPEAN PATENT SPECIFICATION

(11) **EP 3 554 012 B1**
(45) Date of publication and mention of the grant of the patent: **14.07.2021**
(21) Application number: 18167207.2
(22) Date of filing: 13.04.2018
(51) Int. Cl.: H04L 12/26, H04L 29/06, H04W 12/12, H04L 12/58

(54) **TEST ARRANGEMENT AND TEST METHOD**
TESTANORDNUNG UND TESTVERFAHREN
AGENCEMENT ET PROCÉDÉ D'ESSAI

(43) Date of publication of application: 16.10.2019
(73) Proprietor: Rohde & Schwarz GmbH & Co. KG, 81671 München (DE)
(72) Inventor: STERZBACH, Bernhard, 81541 München (DE)
(74) Representative: Isarpatent

(56) References cited:
- EP-A1- 3 276 907
- WO-A1-2017/210040
- CN-A- 107 635 218
- US-A1- 2007 174 917

## Description

### TECHNICAL FIELD

The present invention relates to a test arrangement. The present invention further relates to a test method. In particular, the present invention relates to a security test of a wireless communication device.

### BACKGROUND

EP 3276907 A1 describes a test apparatus for testing a security of communication of a device under test, wherein the test apparatus comprises an RF unit for receiving an RF signal from the device under test. The RF signal carries Internet Protocol. The test apparatus further comprises an IP unit for analyzing IP data carried in the received RF signal.

US 2007/174917 A1 describes a security analyzer for testing the security of a device by attacking the device and observing the device's response. A packet processing analysis is performed for analyzing one or more messages generated by the device in response to an attack.

Although applicable in principal to any test system, the present invention and its underlying problem will be hereinafter described in combination with testing of wireless communication devices.

The use of wireless communication systems for communication between electronic device increases continually with the advance of high-speed wireless data communications.

During development of devices for such communication systems it is necessary to thoroughly test the devices for robustness against security attacks. Security attacks may have influenced to the operation of the device. For example, wireless devices may be powered by batteries, and a security attack may shorten the battery lifetime.

Against this background, the problem addressed by the present invention is to provide a versatile test equipment for testing the security of wireless devices.

### SUMMARY

The present invention solves this problem with a test apparatus and by a test method with the features of the independent claims.

Accordingly it is provided:
- A test apparatus for testing security of a device under test. The test apparatus comprises a radio-frequency (RF) device and an Internet protocol (IP) device. The RF device is adapted to transmit an RF signal to the device under test. The RF device is further adapted to receive an RF signal from the device under test. The IP device is adapted to transmit IP data to the device under test. In particular, the IP data are transmitted by the RF signal to the device under test by the RF device. The IP device is further adapted to receive IP data from the device under test by the RF signal received by the RF device. The IP device is further adapted to generate a security attack to the device under test.

Further, it is provided:
- A test method for testing security of a device under test. The test method comprises the steps of transmitting a radio-frequency (RF) signal to the device under test and/or receiving an RF signal from the device under test. The RF signals may be transmitted and/or received by an RF device. The method further comprises generating a security attack to the device under test. The security attack may be generated by an IP device. Further, the method comprises transmitting Internet protocol (IP) data to the device under test by the RF signal transmitted to the device under and/or receiving IP data from the device under test by the RF signal received by the RF device. The transmission/reception of the IP data may be performed by an IP device.

The present invention is based on the fact that an attack to a device, in particular an IP-based device may cause serious problems. For example, an attack to a device may reveal privacy data. Furthermore, the attack may also cause a malfunction of the device. In particular, energy consumption may increase during an attack, which may significantly reduce the lifetime of a battery powered device.

Especially, wireless devices may communicate with an environment by means of a wireless communication link. In this case, such a wireless communication link may offer an opportunity for attacking a device. Hence, testing the resistance of wireless devices against an attack via wireless communication links is of great importance.

It is therefore an idea of the present invention to provide a security test for wireless devices which can provide a simple, reliable and versatile test of wireless devices against security attacks. For this purpose, the present invention provides a security testing of a wireless device under test by generating security attacks through a wireless communication link.

The device under test may be, for example, a mobile phone or an Internet of Things (IoT) device. However, any other wireless communication device may be possible, too.

The wireless communication link between the device under test and the test apparatus may be established by means of an RF device. For this purpose, the RF device may comprise a data interface for receiving digital data. In particular, the digital data may relate to digital data simulating a security attack. However, it is understood, that the digital interface of the RF device may also receive any other kind of digital data. The digital data received by the digital interface may be converted to a radio frequency signal and the radio frequency signal may be transmitted to the device under test. For this purpose, the RF device may further comprise an RF interface for transmitting the radio frequency signal to the device under test. For example, the RF interface may comprise an antenna for emitting radio-frequency signals. It is understood, that any kind of antenna for emitting the respective radio-frequency signals may be used. For example, the antenna may comprise a MIMO antenna or the like. However, any other antenna may be also used for emitting radio-frequency signals to the device under test.

Furthermore, the RF device may receive radio frequency signal from the device under test, for example by means of the RF interface, especially by means of the antenna. In this case, the RF device may convert the received radio frequency signal to digital data and output the digital data at the digital interface of the RF device.

The RF device may further comprise signal generator for generating radio-frequency signals and/or a modulator/demodulator for modulating and/or demodulating the digital data. For example, a modulator may modulate a radio frequency signal based on the digital data received by the digital interface of the RF device. Accordingly, the modulated radio frequency signal may be provided to the RF interface for emitting the modulated radio frequency signal to the device under test. Furthermore, a demodulator may demodulate modulated radio frequency signal received by the RF interface to extract digital data included in the modulated data frequency signal. The extracted digital data may be provided by the digital interface of the RF device.

The IP device may generate the required data, in particular digital data, for a communication with the device under test. Furthermore, the IP device may also receive digital data sent by the device under test. In particular, the digital data of the communication between the IP device and the device under test may be IP data, i.e. data packets comprising an address, in particular a digital address such as an IP address. The IP address may be specified in terms of numbers, for example in Internet protocol version 4 (IPv4) or Internet protocol version 6 (IPv6). Furthermore, the IP address may also comprise an address relating to a subnet, a broadcast address, or any other kind of an IP address. However, it is understood, that the address may be also specified in other terms, for example in terms of a domain name or the like. In particular, a domain name may be converted to an IP address by means of the domain name system (DNS) server.

The digital data, in particular the IP data may be transmitted, for example in blocks, e.g. in blocks having a predetermined size. In this case, an IP address may be specified each block to be transmitted. The IP address may be included at a predetermined position of the data of a data block. For example, the size and/or the structure of the data blocks may correspond to data blocks which are transmitted in a wired communication network, in particular a wired IP-based network.

Furthermore, the IP device may test the resistance of the device under test in respect to attacks, in particular any kind of security attacks. It is for this purpose that the IP device may generate a number of one or more predetermined security attacks for testing the device under test. In particular, the IP device may generate and perform an attack to the device under test and analyze the response of the device under test when attacking the device under test accordingly. Examples of possible attacks will be described in more detail below.

The IP device may generate a security attack and sent the respective digital data via the RF devised to the device under test. In this way, it is possible to analyze the response of the device under test in view of the security attack. The response of the device under test may be analyzed, for example, by analyzing the digital data received from the device under test via the RF device. In this case, the IP device may perform both, the generation of the attack and the analysis of the response of the device under test. However, it may be also possible that the analysis of the response of the device under test may be carried out by any other appropriate device. For example, the test apparatus may comprise a further analyzing device. Furthermore, the analysis may be even carried out by a separate apparatus which may be connected by a wired or wireless connection to the device under test. Alternatively, it may be also possible only to monitor the response of the device under test by a manual or automatic analysis of the output of the device under test, e.g. by analyzing the output on the display or the like.

In this way, it is possible to perform a security analysis of a wireless device under test by means of a wireless communication link between the test apparatus and the wireless device under test. Thus, it is possible to simulate wireless communications which may be established by the wireless device under test. The security analysis may be performed, for example by establishing a wireless communication link and successfully performing a security attack to the device under test. Furthermore, it may be also possible to generate a security attack to the device under test without a previously established communication link. For example, the security analysis may comprise any kind of attack in order to achieve an unauthorized establishing of the communication link. However, it is understood, that any further kind of attack on the radio frequency communication link to the device under test may be also possible.

Further embodiments of the present invention are subject of the further subclaims and of the following description, referring to the drawings.

In a possible embodiment, the security attack to the device under test comprises at least one of a non-IP channel attack, a password brute force attack, a denial of service attack, and a buffer overflow attack. However, it is understood that the security attack is not limited to the before mentioned attacks.

A non-IP channel attack may be, for example, a transmission of data to the device under test on a communication channel which is not intended, or at least not exclusively intended for an IP-based communication. For example, such an attack may be any kind of data communication with the device under test. A brute force attack, may be, for example, a successively testing of login data, for example passwords or the like, in order to achieve an authorization to the device under test or at least a number of one or more services of the device under test. The brute force attack may be based on a dictionary comprising multiple entries. Furthermore, a brute force attack may also be based on a successively applying combinations of alphanumeric characters, in particular in a systematic scheme or order. Furthermore, the security attack may comprise a denial of service attack or a buffer overflow attack which may be based, for example, on a multiple requests to the device under test within a short time period. In such a case, the device under test might not have the required capabilities to process, respond or deny all the requests, and consequently the device under test might run into trouble. Furthermore, it may be possible to forward a request to the device under test which will cause computational errors in the device under test, and consequently the device under test might perform an unexpected operation. Accordingly, by providing such security attacks, it can be tested whether or not the device under test can deal with such attacks without performing any unexpected operation.

The security attack comprises at least one of providing over the air settings of the device under test, providing unsolicited messages of a short message service (SMS), and providing status or warning messages of a mobile communication service.

For example, a non-IP channel attack may send configuration data to the device under test in order to achieve a predetermined setting or configuration of the device under test. However, such a transmitted configuration to the device under test might be a non-authorized configuration. In this way, it might be possible to achieve a modification of the settings or the configuration of the device under test in order to make an unallowable amendments in the device under test or to read out secured data. Furthermore, the device under test might be set to an unintended operation mode, for example an operation mode requiring a higher consumption of power or the like. Such a configuration or setting might be sent to the device under test via an unauthorized message, especially a message of a short message service (SMS) or the like. Furthermore, it may be also possible to send a status message of a communication network to the device under test in order to cause the device under test to switch in the predetermined operation mode or the like. For example, such a status message may be a status message of a communication network, for example a GSM, UMTS or LTE network, or any other communication network like Bluetooth, WLAN, etc. Furthermore, it may be also possible to send predetermined warning messages of the communication network to the device under test in order to cause the device under test to switch into a predetermined operation mode. However, it is understood, that the present invention is not limited to the above-mentioned examples. Furthermore, any other kind of non-IP channel attack may be possible, too.

In a possible embodiment, the security attack comprises sending a number of more than one messages to the device under test. In particular, the security attack may comprise sending a number of at least 10 messages to the device under test. The messages may comprise any kind of messages. For example, the messages may comprise notifications, warnings, status messages or the like. Furthermore, the messages may also comprise requests, for example requesting a feedback of the device under test, a predetermined handshake operation, or any other kind of message is causing the device under test to perform an operation. However, it is understood, that the number of messages is not limited to number of 10 messages. Moreover any other number of messages, for example a number of 20, 50, 100 or even more messages may be possible, too.

In a possible embodiment, the security attack comprises sending a minimization of drive test measurement request order to the device under test.

Minimization of driving test (MDT) is a standardized mechanism in mobile communication, in particular LTE, to provide operators with network performance optimization tools in a cost efficient manner. In this way, the device under test may be set to a particular operation mode. By applying such an MDT request to the device under test, it can be tested whether or not the device under test might refuse such a request if the request is not appropriate or authorized.

In a possible embodiment, the security attack comprises negotiating a connection with the device under test based on a non-existing, modified, insufficient and/or modified encryption.

For example, it may be possible to test a negotiation procedure of the device under test. In particular, it may be tested, if the device under test might negotiate a connection with a communication partner even though the communication partner would not be authorized. Furthermore, it may be test, if an attempt to negotiate with an incorrect encryption mode would influence the operation of the device under test. For example, such influence might be a consumption of computational resources, computational resources for refusing/rejecting the request etc. However, it is understood that any other attempt of an attack based on an improper, modified or incorrect encryption mode or the like might be also possible.

In a possible embodiment, the security attack comprises modifying and/or replacing a security certificate of an encrypted communication.

When establishing a secure communication, a certificate may be used for verifying the authentication and/or encryption of the communication partner. Certificates may be used, for instance, when establishing a secure communication by Transport Layer Security (TLS) or Secure Sockets Layer (SSL). For example, it may be tested whether or not the device under test recognizes expired, modified or unauthorized certificates or certificates which may be signed by an unauthorized instance.

Furthermore, it may be possible to establish a man in the middle attack or the like. In such a case, it may be possible to use a manipulated, modified, expired or unauthorized certificate.

In a possible embodiment, the IP device comprises a Dynamic Host Configuration Protocol, DHCP, server and/or a dynamic name system, DNS, server. The DHCP server and/or DNS server may be adapted to redirect a communication between the device under test and a further server. In this way, it may be possible to forward a communication from the device under test to the further server, and the further server may communicate with the device under test. In this way, the further server may perform an attack to the device under test.

In a possible embodiment, the further server may be comprised by the test apparatus. In particular, the further server is adapted to simulate an endpoint in a communication with the device under test. In this way, the test apparatus may simulate a communication with the communication partner. Accordingly, it might be tested, whether or not the device under test can recognize that the communication is not performed with the intended communication partner.

In a possible embodiment, the test apparatus comprises a security analyzer. The security analyzer may be adapted to analyze the IP data received by the IP device in response to a security attack based on the received IP data, the analyzer may evaluate the security of the device under test.

The security analyzer may be embodied, for example, in the IP device of the test apparatus. However, it may be also possible that the security analyzer may be a separate device of the test apparatus. Furthermore, it may be even possible that the security analyzer may be an external device which is not included in the test apparatus.

By analyzing the response of the device under test after establishing a security attack, it is possible to evaluate the robustness of the device under test. In particular, it can be determined whether or not the device under test might be influenced by the security attack performed by the test apparatus. Furthermore, the response of the device under test in view of the established security attack can be determined. Accordingly, open issues can be identified and the device under test can be adapted accordingly in order to adapt the device under test for refusing security attacks. In this way, the reliability of the device under test can be increased.

In a possible embodiment, the RF device is adapted to transmit and/or receive RF signals in a number of predetermined communication channels or frequency bands.

For example, the RF device may establish a wireless radio frequency communication link with the device under test based on a predetermined communication channel, a predetermined frequency or a predetermined frequency band. The predetermined communication channel or frequency may be determined depending on the frequency range used by the device under test. For example, a mobile communication device may use a frequency channel/range of a GSM or LTE communication network. Depending on the communication device, frequency ranges channels of a WiFi/WLAN device, a Bluetooth device or the like may be selected.

In order to test the device under test, it may be possible to select at least one frequency range or communication channel covered by the respective device under test. Furthermore, it may be possible to successively use multiple frequency ranges or communication channels or even to successively cover all related frequency ranges or communication channels which may be used by the device under test. In this way, it is possible to identify particular issues which might relate, for example, only to one or more particular frequencies or communication channels.

In a possible embodiment, the RF device is adapted to simulate a communication network comprising a number of communication channels and/or frequency bands. For example, the RF device of the test apparatus may simulate a GSM, UMTS or LTE network. Furthermore, it may be also possible to simulate a WLAN/WiFi network, or any other wireless communication network in which the device under test can be used.

In a possible embodiment, a communication between the IP device and the device under test comprises establishing a voice call and/or transmitting text messages.

For example, a security attack may be embedded in a communication comprising voice data, text data, or any other kind of data. The security attack may be related to the phase when establishing or terminating a voice call, imitating a transmission of a text message or the like. Furthermore, the security attack may be also embedded in phase during a voice call or within the data of text message. However, any other kind of performing a security attack during the transmission of data to the device under test may be also possible.

With the present invention it is therefore now possible to analyze a device under test with respect to any kind of security attack. In particular, it is possible to perform security attacks in a wireless communication channel between the test apparatus and the device under test. In this way, the response of the device under test with respect to the security attack can be easily tested. Accordingly, the resistance of the device under test with respect to the tested that security attacks can be determined. Accordingly, based on the results of such test, the device under test can be further improved and the security of the respective device under test can be enhanced.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
- Fig. 1: shows a block diagram of an embodiment of a test apparatus according to the present invention;
- Fig. 2: shows a block diagram of another embodiment of a test apparatus according to the present invention; and
- Fig. 3: shows a flow diagram of an embodiment of a test method according to the present invention.

The appended drawings are intended to provide further understanding of the embodiments of the invention. They illustrate embodiments and, in conjunction with the description, help to explain principles and concepts of the invention. Other embodiments and many of the advantages mentioned become apparent in view of the drawings. The elements in the drawings are not necessarily shown to scale.

In the drawings, like, functionally equivalent and identically operating elements, features and components are provided with like reference signs in each case, unless stated otherwise.

### DETAILED DESCRIPTION OF THE DRAWINGS

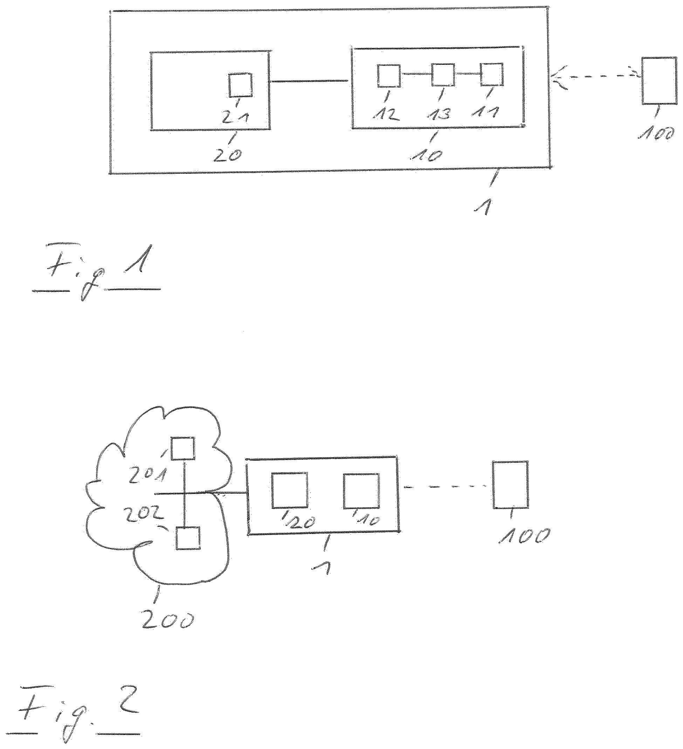

Fig. 1 shows a block diagram of an embodiment of a test apparatus 1. The test apparatus 1 comprises an RF device 10 and an IP device 20.

The RF device 10 may establish a wireless connection with a device under test 100. For this purpose, the RF device 10 may comprise an RF interface 11 for transmitting wireless signals to the device under test 100 and/or receiving wireless signals from the device under test 100. For example, the RF interface 11 may comprise an antenna for emitting and/or receiving a radio frequency signals.

The RF device 10 may further comprise an IP interface 12 for receiving digital data from the IP device 20 and/or transmitting digital data to the IP device 20. The IP interface 12 may be any kind of digital interface for transmitting/receiving digital data.

Furthermore, the RF device 10 may comprise a modulator/demodulator 13. The modulator/demodulator 13 may generate a radio frequency signal and include the digital data received by the IP interface 12 in the radio frequency signal. For this purpose, the radio frequency signal may be modulated by the received digital data. The modulated radio frequency signal may be provided to the RF interface 11. Furthermore, the modulator/demodulator 13 may receive a radio frequency signal from the RF interface 11 and extracts/demodulate digital data included in the received radio frequency signal. The extracted digital data may be provided to the IP interface 12.

The IP device 20 may receive digital data provided by the RF device 10. Furthermore, IP device 20 may provide digital data to the RF device 10. For this purpose, IP device 20 may comprise a digital interface 21. The digital interface 21 of the IP device 20 may be communicatively coupled with the IP interface 22 of the RF device 10.

IP device 20 may generate any kind of digital data. In particular, IP devices 20 may generate digital data relating to a security attack of a device under test 100. The security attack to the device under test 100 may comprise any kind of security attack. In particular, the security attack may comprise, for example, a non-IP channel attack, a password brute force attack, a denial of service attack, a buffer overflow attack or any other kind of security attack.

For this purpose, IP device 20 may generate the required data relating to such a security attack and forward the data via the RF device 10 to the device under test 100. In particular, the security attack to the device under test 100 may comprise an IP address related to the device under test 100.

After initiating a security attack to the device under test 100, the response of the device under test 100 to the security attack is analyzed. For example, it may be determined whether the operation of the device under test 100 in response to the security attack is influenced. For example, the security attack may require additional computational resources of the device under test 100. In this case, the normal operation of the device under test 100 may be slowed down, or even some features of the device under test 100 may be no longer available after initiating a security attack by the test apparatus 1. Furthermore, the configuration or the setting of the device under test 100 may be modified by the security attack. Accordingly, such a modification of the configuration or set up of the device under test 100 may lead to a modified operation of the device under test 100.

In response to the security attack, the availability and/or the operation of the device under test 100 may be monitored and analyzed. For example, a further analyzer (not illustrated) may be connected to the device under test 100 in order to monitor the response of the device under test 100 during the security attack. Furthermore, it may be also possible to receive radio frequency signals by the RF device 10 from the device under test 100 during the security attack. In this case, the received RF signals may be demodulated and forwarded to the IP device 20. Accordingly, IP device 20 may analyze the data received from the device under test 100 in order to determine the response of the device under test 100.

For instance, IP device 20 may determine whether or not a security attack of the test apparatus 1 causes a response of the device under test 100, or whether the security attack is ignored or refused by the device under test 100 without any response. For example, it might be possible that the device under test 100 does not provide any response in case of the security attack, or device under test 100 only replies a refusal to the security attacked.

In case that the security attack causes a response of the device under test 100, IP devices 20 or another analyzing device of the test apparatus 1 may analyze the response of the device under test 100. For example, it may be determined if the security attack slows down the operational speed of the device under test 100, or a configuration or setup of the device under test 100 might be changed in response to the security attack. Furthermore, it might be even possible that at least some secured data might be read out from the device under test 100 in response to the security attack. However, it is understood that any other kind of analysis in response to the security attack may be also carried out. As already mentioned above, the analysis of the security attack may be carried out by the IP device 20, a further analyzing device of the test apparatus 1 or even by another external device which is connected by a wired or wireless communication channel to the device under test 100.

As also mentioned above, the security attack may comprise any kind of security attack, in particular any kind of IP-based security attack. For example, the security attack may comprise a non-IP channel attack. Such a non-IP channel attack may comprise, for example, providing over the area settings of the device under test 100. For example, a message, in particular a short message service message may be transmitted to the device under test 100 in order to cause a manipulation of the configuration or setup of the device under test 100. Furthermore, a number of one or more unsolicited messages, for instance messages of short message service may be sent to the device under test 100. Since receiving each message may cause operational resources of the device under test 100, the operation of the device under test 100 may be influenced by sending such unsolicited to the device under test 100. Furthermore, it may be possible to send status messages or warning messages to the device under test 100. For example, the status messages or warning messages may be messages of a mobile communication service, for instance messages of a GSM or LTE network. However, it is understood that the present invention is not limited to the above described messages for attacking the device under test 100. Any other kind of messages which may be send to the device under test 100 for influencing the operation of the device under test 100 may be also possible.

A security attack may also comprise an attack for determining a password, a security key, login data, or the like. For this purpose, a brute force attack may be performed in order to determine the respective data. The brute force attack may be based, for example, on a dictionary or by simply trying any combination of characters, numbers, alphanumeric signs, etc. On the one hand side, such a brute force attack may require computational resources of the device under test 100 which may slow down the operational speed of the device under test 100. Furthermore, by such a brute force attack, an attacker may obtain secure data such as a password or the like. Thus, it may be of high importance to identify and refuse such attacks. Accordingly, by testing the response of the device under test 100, the security of the device under test 100 can be evaluated.

Furthermore, the security attack may comprise a denial of service attack or a buffer overflow attack. In particular, a huge number of requests may be transmitted to the device under test 100. For example, a number of 10 or more, or even 50, 100, thousand or more requests, messages, etc. may be sent to the device under test 100. In case the device under test 100 tries to processes each of these requests, the computational resources of the device under test 100 will be not sufficient and thus, the device under test 100 will run into trouble. Furthermore, by carrying out a buffer overflow attack, it may be possible that the device under test 100 changes into an undesired or uncontrolled state. Thus, the operation of the device under test 100 might be influenced.

The security attack may further comprise sending a minimization of test drive measurement request order to the device under test 100. Minimization of driving test (MDT) is a standardized mechanism introduced in LTE to provide operators with network performance optimization tools in a cost efficient manner.

The security attack may further comprise negotiating a connection with the device under test 100 based on a non-existing, modified, insufficient and/or modified encryption. If accordingly, it can be tested whether the device under test 100 might even accept such an incorrect encryption. In case the device under test 100 might refuse a negotiation based on the above mentioned encryption, it might be analyzed how the device under test 100 is influenced by such negotiation attempts.

Fig 2. shows a test apparatus 1 according to a further embodiment. The test apparatus 1 according to this embodiment may correspond to the test apparatus 1 is described in connection with Fig. 1. Thus, the explanation in connection with Fig. 1 also applies to this embodiment.

As can be seen in Fig. 2, test apparatus 1 may be further connected with an additional external network 200. External network 200 may be a wired or wireless network. For example, external network 200 may comprise a number of one or more servers 201, 202. In this case, device under test 100 may establish a communication with servers 201, 202 of the external network 200 via the test apparatus 1. In this case, the communication between the device under test 100 and the external network 200 may be influenced by test apparatus 1. For example, at least the some of the data between the device under test 100 and the external network 200 may be modified by the test apparatus 1. For instance, IP device 20 may control the data flow between the external network 200 and the device under test 100. For example, all or at least the sum of the data may be redirected to another server. The other server may be another external server of the external network 200 or a server within the test device 1. For example, an IP address of a desired server may be changed by test apparatus 1 in order to redirect data flow. Furthermore, in case a server is addressed by a domain name or the like, test apparatus 1 may comprise a dynamic host configuration protocol (DHCP) server, and this DHCP server may respond a modified IP address directing to the further server. Accordingly, the data flow to/from the device under test 100 can be influenced. Accordingly, it is possible to manipulate the data to/from the device under test 100.

In case a secure communication between the device under test 100 and a further server 201, 202 of the external network is established, a man in the middle attack may be performed. For this purpose, test apparatus 1 may manipulate a security certificate. In particular, test apparatus 1 may generate a security attack to the device under test 100 using a modified, expired, revoked or unassigned certificate. Furthermore, the certificated used for a secure communication with the device under test 100 may be further modified in any other manner. In this case, test apparatus 1 may analyze the response of device under test 100 when using such manipulated certificates.

The test apparatus 1 may establish a wireless communication between the device under test 100 and the RF device 10 of the test apparatus 1 based on a number of one or more predetermined communication channels or one or more predetermined frequencies/frequency bands. In particular, the security attack may be carried out by using at least one frequency or communication channels. However, it may be also possible to successively test the security attacked at different communication channels and/frequency band. For example, multiple communication channels or frequency bands may be tested successively. Accordingly, it can be tested whether or not the response of the device under test 100 is the same for each channel or frequency.

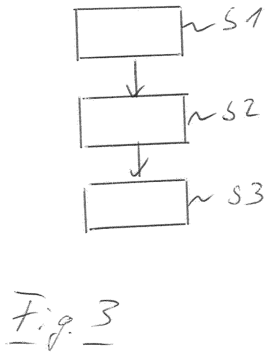

For sake of clarity in the following description of the method based Fig. 3 the reference signs used above in the description of test apparatus 1 based Figs. 1 or 2 will be maintained.

Fig. 3 shows a flow diagram of a test method for testing a device under test 100.

The test method comprise transmitting S1 a RF signal to the device under test 100 and receiving an RF signal from the device under test 100 by an RF device 10. In step S2 a security attack to the device under test 100 is generated by an IP device 20. The method further comprises transmitting S3 IP data to the device under test 100 by the RF signal transmitted to the device under test 100 by the RF device 10, and receiving IP data from the device under test 100 by the RF signal received by the RF device 10 by an IP device 20.

As already explained above, the generated security attack to the device under test 100 may comprise at least one of a non-IP channel attack, a password brute force attack, a denial of service attack and a buffer overflow attack.

Summarizing, the present invention relates to a security test of a wireless device. For this purpose, a security attack to the wireless device is performed by a test apparatus applying a wireless communication link to the device under test. The security attack may comprise a non-IP channel attack, a password brute force attack, a denial of service attack and a buffer overflow attack.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims. Generally, this application is intended to cover any adaptations or variations of the specific embodiments discussed herein.

In the foregoing detailed description, various features are grouped together in one or more examples or examples for the purpose of streamlining the disclosure. It is understood that the above description is intended to be illustrative, and not restrictive. It is intended to cover all alternatives and modifications within the scope of the invention. Many other examples will be apparent to one skilled in the art upon reviewing the above specification.

Specific nomenclature used in the foregoing specification is used to provide a thorough understanding of the invention. However, it will be apparent to one skilled in the art in light of the specification provided herein that the specific details are not required in order to practice the invention. Thus, the foregoing descriptions of specific embodiments of the present invention are presented for purposes of illustration and description. They are not intended to be exhaustive or to limit the invention to the precise forms disclosed; obviously many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated. Throughout the specification, the terms "including" and "in which" are used as the plain-English equivalents of the respective terms "comprising" and "wherein," respectively. Moreover, the terms "first," "second," and "third," etc., are used merely as labels, and are not intended to impose numerical requirements on or to establish a certain ranking of importance of their objects.

## Claims

1. Test apparatus (1) for testing security of a device under test (100), the test apparatus (1) comprising:
a radio-frequency, RF, device (10), adapted to transmit an RF signal to the device under test (100) and to receive an RF signal from the device under test (100);
an Internet protocol, IP, device (20), adapted to transmit IP data to the device under test (100) by the RF signal transmitted to the device under test (100) by the RF device (10), and to receive IP data from the device under test (100) by the RF signal received by the RF device (10),
**characterized in that** the IP device (20) is adapted to generate a security attack to the device under test (100),
wherein the security attack to the device under test (100) comprises at least one of:
- providing over the air settings of the device under test (100),
- providing unsolicited messages of a short message service, and
- providing status or warning messages of a mobile communication service.

2. Test apparatus (1) according to claim 1, wherein the security attack to the device under test (100) further comprises a password brute force attack.

3. Test apparatus (1) according to claim 1 or 2, wherein the security attack to the device under test (100) further comprises at least one of a denial of service attack and a buffer overflow attack.

4. Test apparatus (1) according to any of claims 1 to 3, wherein the security attack comprises sending a number of more than one messages to the device under test (100).

5. Test apparatus (1) according to any of claims 2 to 4, wherein the security attack comprises sending a minimization of drive test measurement request order to the device under test (100).

6. Test apparatus (1) according to any of claims 1 to 5, wherein the security attack comprises negotiating a connection with the device under test (100) based on a non-existing, modified, insufficient and/or modified encryption.

7. Test apparatus (1) according to any of claims 1 to 6, wherein the security attack comprises modifying and/or replacing security certificated of an encrypted communication.

8. Test apparatus (1) according to any of claims 1 to 7, wherein the IP device (20) comprises a Dynamic Host Configuration Protocol, DHCP, server and/or a dynamic name system, DNS, server, and wherein the DHCP and/or DNS server is adapted to redirect a communication between the device under test (100) and a further server.

9. Test apparatus (1) according to claim 8, wherein the test apparatus comprises the further server, and wherein in the further server is adapted to simulate an endpoint in a communication with the device under test (100).

10. Test apparatus (1) according to any of claims 1 to 9, comprising a security analyzer adapted to analyze the IP data received by the IP device (20) in response to a security attack and to evaluate the security of the device under test (100) based on the analyzed IP data.

11. Test apparatus (1) according to any of claims 1 to 10, wherein the RF device (10) is adapted to transmit and/or receive RF signals in a number of predetermined communication channels or frequency bands.

12. Test apparatus (1) according to any of claims 1 to 11, wherein the RF device (10) is adapted to simulate a communication network comprising a number of communication channels and/or frequency bands.

13. Test apparatus (1) according to any of claims 1 to 12, wherein a communication between the IP device (20) and the device under test (100) comprises establishing a voice call and/or transmitting text messages.

14. Test method for testing security of a device under test (100), the test method comprising:
transmitting (S1) a radio-frequency, RF, signal to the device under test (100) and receiving an RF signal from the device under test (100) by an RF device (10); and
transmitting (S3) Internet protocol, IP, data to the device under test (100) by the RF signal transmitted to the device under test (100) by the RF device (10), and receiving IP data from the device under test (100) by the RF signal received by the RF device (10) by an IP device (20), **characterized by**
generating (S2) a security attack to the device under test (100) by an IP device (20);
wherein the generated security attack to the device under test (100) comprises at least one of:
- providing over the air settings of the device under test (100),
- providing unsolicited messages of a short message service, and
- providing status or warning messages of a mobile communication service.

15. Test method according to claim 14, wherein the generated security attack to the device under test (100) further comprises at least one of a password brute force attack, a denial of service attack and a buffer overflow attack.

## Patentansprüche

1. Testvorrichtung (1) zum Testen der Sicherheit einer zu testenden Vorrichtung (100), wobei die Testvorrichtung (1) umfasst:
eine Hochfrequenz-, HF-, Vorrichtung (10), die dafür eingerichtet ist, ein HF-Signal an die zu testende Vorrichtung (100) zu senden und ein HF-Signal von der zu testenden Vorrichtung (100) zu empfangen;
eine Internetprotokoll-, IP-, Vorrichtung (20), die dafür eingerichtet ist, IP-Daten an die zu testende Vorrichtung (100) durch das HF-Signal zu übertragen, das durch die HF-Vorrichtung (10) an die zu testende Vorrichtung (100) übertragen wird, und um IP-Daten von der zu testenden Vorrichtung (100) durch das HF-Signal zu empfangen, das von der HF-Vorrichtung (10) empfangen wird,
**dadurch gekennzeichnet, dass**
die IP-Vorrichtung (20) dafür eingerichtet ist, einen Sicherheitsangriff auf die zu testenden Vorrichtung (100) zu erzeugen,
wobei der Sicherheitsangriff auf die zu testende Vorrichtung (100) mindestens eines von Folgendem umfasst:
- Bereitstellen von Over-the-Air-Einstellungen der zu testenden Vorrichtung (100),
- Bereitstellen von unaufgeforderten Nachrichten eines Kurznachrichtendienstes, und
- Bereitstellen von Status- oder Warnmeldungen eines mobilen Kommunikationsdienstes.

2. Testvorrichtung (1) nach Anspruch 1, wobei der Sicherheitsangriff auf die zu testende Vorrichtung (100) ferner einen Passwort-Brute-Force-Angriff umfasst.

3. Testvorrichtung (1) nach Anspruch 1 oder 2, wobei der Sicherheitsangriff auf die zu testende Vorrichtung (100) ferner mindestens einen von einem Denial-of-Service-Angriff und einem Pufferüberlauf-Angriff umfasst.

4. Testvorrichtung (1) nach einem der Ansprüche 1 bis 3, wobei der Sicherheitsangriff das Senden einer Anzahl von mehr als einer Nachricht an die zu testende Vorrichtung (100) umfasst.

5. Testvorrichtung (1) nach einem der Ansprüche 2 bis 4, wobei der Sicherheitsangriff das Senden eines Befehls zur Minimierung der Drive-Test-Messanforderung an die zu testende Vorrichtung (100) umfasst.

6. Testvorrichtung (1) nach einem der Ansprüche 1 bis 5, wobei der Sicherheitsangriff das Aushandeln einer Verbindung mit der zu testenden Vorrichtung (100) auf der Basis einer nicht vorhandenen, modifizierten, unzureichenden und/oder veränderten Verschlüsselung umfasst.

7. Testvorrichtung (1) nach einem der Ansprüche 1 bis 6, wobei der Sicherheitsangriff das Modifizieren und/oder Ersetzen von Sicherheitszertifikaten einer verschlüsselten Kommunikation umfasst.

8. Testvorrichtung (1) nach einem der Ansprüche 1 bis 7, wobei die IP-Vorrichtung (20) einen Dynamic Host Configuration Protocol-, DHCP-, Server und/oder einen Dynamic Name System-, DNS-, Server umfasst, und wobei der DHCP- und/oder DNS-Server dafür eingerichtet ist, eine Kommunikation zwischen der zu testenden Vorrichtung (100) und einem weiteren Server umzuleiten.

9. Testvorrichtung (1) nach Anspruch 8, wobei die Testvorrichtung den weiteren Server umfasst, und wobei der weitere Server dafür eingerichtet ist, einen Endpunkt in einer Kommunikation mit der zu testenden Vorrichtung (100) zu simulieren.

10. Testvorrichtung (1) nach einem der Ansprüche 1 bis 9, umfassend einen Sicherheitsanalysator, der dafür eingerichtet ist, die von der IP-Vorrichtung (20) empfangenen IP-Daten als Reaktion auf einen Sicherheitsangriff zu analysieren und die Sicherheit der zu testenden Vorrichtung (100) basierend auf den analysierten IP-Daten zu bewerten.

11. Testvorrichtung (1) nach einem der Ansprüche 1 bis 10, wobei die HF-Vorrichtung (10) dafür eingerichtet ist, HF-Signale in einer Anzahl von vorbestimmten Kommunikationskanälen oder Frequenzbändern zu senden und/oder zu empfangen.

12. Testvorrichtung (1) nach einem der Ansprüche 1 bis 11, wobei die HF-Vorrichtung (10) dafür eingerichtet ist, ein Kommunikationsnetz mit einer Anzahl von Kommunikationskanälen und/oder Frequenzbändern zu simulieren.

13. Testvorrichtung (1) nach einem der Ansprüche 1 bis 12, wobei eine Kommunikation zwischen der IP-Vorrichtung (20) und der zu testenden Vorrichtung (100) den Aufbau eines Sprachanrufs und/oder die Übertragung von Textnachrichten umfasst.

14. Testverfahren zum Testen der Sicherheit einer zu testenden Vorrichtung (100), wobei das Testverfahren umfasst:
Senden (S1) eines Hochfrequenz-, HF-, Signals an die zu testende Vorrichtung (100) und Empfangen eines HF-Signals von der zu testenden Vorrichtung (100) durch eine HF-Vorrichtung (10); und
Senden (S3) von Internetprotokoll-, IP-, Daten an die zu testende Vorrichtung (100) durch das von der HF-Vorrichtung (10) an die zu testende Vorrichtung (100) gesendete HF-Signal, und Empfangen von IP-Daten von der zu testenden Vorrichtung (100) durch das von der HF-Vorrichtung (10) empfangene HF-Signal durch eine IP-Vorrichtung (20), Erzeugen (S2) eines Sicherheitsangriffs auf die zu testende Vorrichtung (100) durch eine IP-Vorrichtung (20);
wobei der erzeugte Sicherheitsangriff auf die zu prüfende Vorrichtung (100) mindestens eines von Folgendem umfasst:
- Bereitstellen von Over-the-Air-Einstellungen der zu testenden Vorrichtung (100),
- Bereitstellen von unaufgeforderten Nachrichten eines Kurznachrichtendienstes, und
- Bereitstellen von Status- oder Warnmeldungen eines mobilen Kommunikationsdienstes.

15. Testverfahren nach Anspruch 14, wobei der erzeugte Sicherheitsangriff auf die zu testende Vorrichtung (100) ferner mindestens einen von einem Passwort-Brute-Force-Angriff, einem Denial-of-Service-Angriff und einem Pufferüberlauf-Angriff umfasst.

## Revendications

1. Appareil de test (1) pour tester la sécurité d'un dispositif en cours de test (100), l'appareil de test (1) comprenant :
un dispositif radiofréquence, RF (10), conçu pour émettre un signal RF vers le dispositif en cours de test (100) et pour recevoir un signal RF à partir du dispositif en cours de test (100) ;
un dispositif à protocole Internet, IP (20), conçu pour émettre des données IP vers le dispositif en cours de test (100) par le signal RF émis vers le dispositif en cours de test (100) par le dispositif RF (10), et pour recevoir des données IP à partir du dispositif en cours de test (100) par le signal RF reçu par le dispositif RF (10),
**caractérisé en ce que**
le dispositif IP (20) est conçu pour générer une attaque de sécurité contre le dispositif en cours de test (100),
dans lequel l'attaque de sécurité contre le dispositif en cours de test (100) comprend au moins l'une parmi :
- la fourniture de réglages par voie hertzienne du dispositif en cours de test (100),
- la fourniture de messages non sollicités d'un service de messages courts, et
- la fourniture de messages de statut ou d'avertissement d'un service de communication mobile.

2. Appareil de test (1) selon la revendication 1, dans lequel l'attaque de sécurité contre le dispositif en cours de test (100) comprend en outre une attaque par force brute sur les mots de passe.

3. Appareil de test (1) selon la revendication 1 ou 2, dans lequel l'attaque de sécurité contre le dispositif en cours de test (100) comprend en outre au moins l'une parmi une attaque par déni de service et une attaque par débordement de mémoire tampon.

4. Appareil de test (1) selon l'une quelconque des revendications 1 à 3, dans lequel l'attaque de sécurité comprend l'envoi d'un nombre de messages supérieur à un vers le dispositif en cours de test (100).

5. Appareil de test (1) selon l'une quelconque des revendications 2 à 4, dans lequel l'attaque de sécurité comprend l'envoi d'un ordre de requête de mesure de minimisation de test de couverture vers le dispositif en cours de test (100).

6. Appareil de test (1) selon l'une quelconque des revendications 1 à 5, dans lequel l'attaque de sécurité comprend la négociation d'une connexion avec le dispositif en cours de test (100) sur la base d'un chiffrement inexistant, modifié, insuffisant et/ou modifié.

7. Appareil de test (1) selon l'une quelconque des revendications 1 à 6, dans lequel l'attaque de sécurité comprend la modification et/ou le remplacement de certificats de sécurité d'une communication chiffrée.

8. Appareil de test (1) selon l'une quelconque des revendications 1 à 7, dans lequel le dispositif IP (20) comprend un serveur de protocole de configuration d'hôte dynamique, DHCP, et/ou un serveur de système de noms dynamique, DNS, et dans lequel le serveur DHCP et/ou DNS est conçu pour rediriger une communication entre le dispositif en cours de test (100) et un serveur supplémentaire.

9. Appareil de test (1) selon la revendication 8, dans lequel l'appareil de test comprend le serveur supplémentaire, et dans lequel le serveur supplémentaire est conçu pour simuler un point d'extrémité dans une communication avec le dispositif en cours de test (100).

10. Appareil de test (1) selon l'une quelconque des revendications 1 à 9, comprenant un analyseur de sécurité conçu pour analyser les données IP reçues par le dispositif IP (20) en réponse à une attaque de sécurité et pour évaluer la sécurité du dispositif en cours de test (100) sur la base des données IP analysées.

11. Appareil de test (1) selon l'une quelconque des revendications 1 à 10, dans lequel le dispositif RF (10) est conçu pour émettre et/ou recevoir des signaux RF dans un certain nombre de canaux de communication prédéterminés ou de bandes de fréquences prédéterminées.

12. Appareil de test (1) selon l'une quelconque des revendications 1 à 11, dans lequel le dispositif RF (10) est conçu pour simuler un réseau de communication comprenant un certain nombre de canaux de communication et/ou de bandes de fréquences.

13. Appareil de test (1) selon l'une quelconque des revendications 1 à 12, dans lequel une communication entre le dispositif IP (20) et le dispositif en cours de test (100) comprend l'établissement d'un appel vocal et/ou l'émission de messages textuels.

14. Procédé de test pour tester la sécurité d'un dispositif en cours de test (100), le procédé de test comprenant :
l'émission (S1) d'un signal radiofréquence, RF, vers le dispositif en cours de test (100) et la réception d'un signal RF à partir du dispositif en cours de test (100) par un dispositif RF (10) ; et
l'émission (S3) de données de protocole Internet, IP, vers le dispositif en cours de test (100) par le signal RF émis vers le dispositif en cours de test (100) par le dispositif RF (10), et la réception de données IP à partir du dispositif en cours de test (100) par le signal RF reçu par le dispositif RF (10) par un dispositif IP (20),
**caractérisé par**
la génération (S2) d'une attaque de sécurité contre le dispositif en cours de test (100) par un dispositif IP (20) ;
dans lequel l'attaque de sécurité générée contre le dispositif en cours de test (100) comprend au moins l'une parmi :
- la fourniture de réglages par voie hertzienne du dispositif en cours de test (100),
- la fourniture de messages non sollicités d'un service de messages courts, et
- la fourniture de messages de statut ou d'avertissement d'un service de communication mobile.

15. Procédé de test selon la revendication 14, dans lequel l'attaque de sécurité générée contre le dispositif en cours de test (100) comprend en outre au moins l'une parmi une attaque par force brute sur les mots de passe, une attaque par déni de service et une attaque par débordement de mémoire tampon.
